# EUROPÄISCHE PATENTSCHRIFT

(11) **EP 2 175 110 B1**
(45) Veröffentlichungstag und Bekanntmachung des Hinweises auf die Patenterteilung: **04.05.2011**
(21) Anmeldenummer: 09168029.8
(22) Anmeldetag: 18.08.2009
(51) Int. Cl.: F01N 3/023, F01N 9/00, B01D 53/94, F02D 41/02, G01C 21/26

(54) **Vorrichtung und Verfahren zur Verbesserung einer Regeneration eines Dieselrußpartikelfilters**
Device and method for improving a diesel particulate filter regeneration
Dispositif et procédé pour améliorer la régénération d'un filtre à suie pour moteur diesel

(30) Priorität: 10.10.2008 DE 102008042738
(43) Veröffentlichungstag der Anmeldung: 14.04.2010
(73) Patentinhaber: Robert Bosch GmbH, 70442 Stuttgart (DE)
(72) Erfinder: Kleine-Besten, Thomas, 38116 Braunschweig (DE); Gercke, Jobst, 31171 Nordstemmen (DE)

(56) Entgegenhaltungen:
- EP-A- 1 536 109
- WO-A-01/25606
- DE-A1-102004 005 072
- GB-A- 2 393 404
- JP-A- 2003 314 250
- US-A1- 2008 178 576

## Beschreibung

### Technisches Gebiet

Die Erfindung betrifft eine Vorrichtung und ein Verfahren insbesondere zur Verbesserung einer Regeneration von Abgasnachbehandlungsvorrichtungen, wie insbesondere nach dem Oberbegriff von Anspruch 1 und von Anspruch 9.

### Stand der Technik

Bei modernen Fahrzeugen wird der Antriebsmotor, wie beispielsweise die Brennkraftmaschine, mittels einer elektronischen Steuereinheit elektronisch gesteuert und/oder geregelt. Diese Steuerung und/oder Regelung hat Einfluss beispielsweise auf die Leistung, die Drehzahl, das Drehmoment des Antriebsmotors, aber auch auf das Abgas, wie die Abgasmenge, dessen Zusammensetzung und der Abgastemperatur.

Bei manchen Anwendungsfällen, wie beispielsweise bei Fahrzeugen, ist in dem Abgasstrang der Brennkraftmaschine ein Partikelfilter vorgesehen, in welchem die von der Brennkraftmaschine emittierten Partikel eingelagert werden. Die Partikel können dabei brennbar sein, wobei sie auf Kohlenstoffbasis basieren können und durchaus als Rußpartikel bestehen können. Die heute verwendeten Partikelfilter haben nur eine endliche Aufnahmekapazität und müssen nach einer vorbestimmten Betriebsdauer immer einmal wieder regeneriert werden. Dies geschieht, indem die eingelagerten Partikel oxidiert werden, wobei bei diesem Oxidationsprozess Wärme freigesetzt wird. Diese Freisetzung von Wärme muss kontrolliert werden, da ansonsten bei einer unkontrollierten Oxidation Temperaturen oder Temperaturspitzen im Partikelfilter erreicht werden können, die den Partikelfilter hinsichtlich seiner Funktion und/oder Haltbarkeit schädigen oder gar zerstören können. Derzeit wird gemäß Stand der Technik die Eingangstemperatur des Abgases, das in den Partikelfilter gelangt, soweit angehoben, bis eine Schwellentemperatur für die Oxidation der Partikel erreicht oder überschritten ist.

Dabei wird nach dem Stand der Technik eine Regeneration eines Partikelfilters durchgeführt, wenn vorgegebene Bedingungen, wie der Temperatur des Abgases o.ä., erreicht sind, wobei bewertet wird, ob es notwendig und günstig ist, eine Regeneration einzuleiten.

Dabei kann es durchaus kritisch sein, wenn es notwendig wäre, eine Regeneration einzuleiten, aber die dafür günstigen Bedingungen nicht vorliegen, so dass beispielsweise mangels Last und/oder Volumenstrom des Abgases keine Regenerationsbedingungen erreicht sind. In einem solchen Falle würde die Einleitung der Regeneration nicht den gewünschten Erfolg bringen, weil die für die Regeneration notwendigen Temperaturen nicht erreicht werden könnten. In einem solchen Fall würde das Motorsteuergerät auf einer Anzeige des Fahrers im Cockpit eine Anzeige generieren, wonach eine Werkstatt auszusuchen wäre oder es wird alternativ ein so genannter "Speed-Request", also eine Anfrage für eine höhere Fahrgeschwindigkeit, angezeigt. Diese Anfrage für eine höhere Geschwindigkeit soll dem Fahrer des Fahrzeuges signalisieren, dass eine Regeneration des Partikelfilters durchgeführt werden soll und dass es dazu günstig sei, wenn eine höhere Fahrgeschwindigkeit erreicht wird, weil dadurch die benötigte Abgastemperatur erreicht wird.

Diese Art von Anzeigen sind jedoch für den Fahrer des Fahrzeuges eher ungewohnt und können ihm signalisieren, dass mit dem Fahrzeug etwas nicht in Ordnung ist, was dem Fahrer grundsätzlich unangenehm ist und somit eher nicht erwünscht ist, weil der Fahrer durch die Anzeige eines Werkstattaufenthaltes entweder mit einem Zeitverlust durch das Aufsuchen der Werkstatt rechnet oder die Information auf der Anzeige nicht versteht und die Anzeige als Fehler des Fahrzeugs fehl interpretiert.

Auch Dieselrußpartikelfilter müssen regelmäßig frei gebrannt werden. Es ist ebenfalls bekannt, diese Filter in zeitlich regelmäßigen Abständen freizubrennen. Dabei kann auch hier ein Freibrennen zu einem ungünstigen Zeitpunkt erfolgen, beispielsweise kurz vor einem Fahrtende oder im ungünstigen Stadtverkehr. Ein optimales Freibrennen muss nämlich bei einer bestimmten Mindestgeschwindigkeit erfolgen und unterhalb einer Höchstgeschwindigkeit über einen definierten Zeitraum erfolgen. Wenn das Freibrennen nicht vollständig oder optimal erfolgt ist, muss bei bekannten Lösungen das Freibrennen bei der nächsten Gelegenheit erneut gestartet werden. Um das Freibrennen starten zu können, muss das Fahrzeug durch die Steuerung schnell auf Betriebstemperatur gebracht werden, was aber den Kraftstoffverbrauch erheblich ansteigen lässt.

Die Nutzung einer Navigationsvorrichtung für solche Prozesse ist bereits bekannt.

Die JP 2003314250 A beschreibt einen Regenerationsprozess eines Filters. Eine Navigationsvorrichtung liefert eine Information einer kalkulierten Zeit.

Aus der US 2008 / 0178576 A1 ist eine Vorrichtung zur Steuerung einer Abgasnachbehandlung bekannt. Der Dieselmotor ist mit einer ersten Abgasleitung verbunden. Daran ist ein Ventil angeschlossen, das im Normalzustand eine Verbindung zu einer zweiten Leitung herstellt und zu einer dritten Leitung mit einem Partikelfilter umschalten kann. An der zweiten Leitung ist eine Abgasvorrichtung angeschlossen. Ein Drucksensor misst den Druck vor dem Partikelfilter, wobei bei Überschreiten eines Schwellwertes eine Anzeige erfolgen soll, die dem Fahrer das Aufsuchen einer Werkstatt signalisieren soll. Es ist ein GPS vorhanden, der die Aufgabe hat, das Ventil zu steuern und den Filter zu aktivieren.

Eine optimierte Regeneration eines Partikelfilters unter Nutzung von Informationsdaten einer Navigationsvorrichtung ist in der DE 10 2004 005 072 A1 beschrieben. Diese Lösung zeichnet sich dadurch aus, dass einer Steuereinrichtung die die Fahrstrecke betreffenden Informationsdaten zugeführt werden und dass die Regenerationszyklen unter Berücksichtigung der Informationsdaten gesteuert werden. Hierbei werden Daten der Navigationsvorrichtung an die Steuereinrichtung weitergeleitet.

Die EP 1 536 109 A beschreibt ebenfalls eine Regeneration bei einem Partikelfilter eines Dieselmotors. Hierbei hängt ein Regenerationszeitpunkt von Daten eines Navigationssystems ab. Das Navigationssystem sendet ein Signal an eine Steuereinheit.

Die GB 2 393 404 A offenbart ein Regenerationssystem eines Diesel-Partikelfilters, bei dem eine Navigationsvorrichtung mit einer Steuereinheit verbunden ist. Die Steuereinheit empfängt auch hier Daten der Navigationsvorrichtung.

### Darstellung der Erfindung: Aufgabe, Lösung, Vorteile

Es ist die Aufgabe der vorliegenden Erfindung, eine Vorrichtung und ein Verfahren zu schaffen, mittels welchem eine verbesserte Abgasnachbe handlung im Zusammenhang mit einem Dieselrußpartikelfilter erreicht wird.

Erfindungsgemäß wird die Aufgabe bezüglich der Vorrichtung gelöst mit einer Vorrichtung zur Steuerung einer Abgasnachbehandlung eines Kraftfahrzeugs mit einer Diesel-Brennkraftmaschine als Antriebsmotor und einem Dieselrußpartikelfilter mit einer Steuereinheit zur Steuerung des Antriebsmotors und zum Einleiten einer Regeneration des Dieselrußpartikelfilters, wobei weiterhin eine Navigationsvorrichtung vorgesehen ist, wo bei für die Steuervorrichtung und für die Navigationsvorrichtung bzw. zwischen diesen Signale oder Daten bezüglich der Steuerung der Regeneration austauschbar sind. Dabei werden Signale oder Daten ausgetauscht, um die Steuerung der Regeneration zu ermöglichen oder zu fördern, wenn die Fahrzeugbedingungen dies nicht als vorteilhaft oder möglich ansehen lassen.

Ein Freibrennen kann durch eine signifikante Erhöhung der Abgastemperatur erfolgen. Diese wird dadurch erreicht, dass mehr Kraftstoff verbrannt wird, als für die eigentliche Fortbewegung notwendig wäre. Das Freibrennen kann beispielsweise 5 bis 15 Minuten, z.B. 10 Minuten, oder z.B. 5 bis 15 km, insbesondere etwa 10 km dauern.

Der wesentliche Vorteil der Erfindung liegt also in einer Optimierung eines Zeitpunktes zum Freibrennen des Dieselrußpartikelfilters. Damit werden die Filterfunktion und die Lebensdauer des Filters optimiert. Weiterhin wird vermieden, dass ein Freibrennen kurz vor dem Erreichen des Fahrtzieles erfolgt, so dass unangenehme Geruchsbelästigungen vermieden werden.

Durch die Erfindung wird eine signifikante Kraftstoffersparnis erreicht. So ist es möglich, den Filter z.B. alle 800 km freizubrennen anstatt z.B. alle 200 km, was durch die genannten ungünstigen Bedingungen erforderlich wäre.

Dabei ist vorgesehen, dass für die Steuereinheit ein Signal an die Navigationsvorrichtung sendbar ist, wenn eine höhere Fahrgeschwindigkeit für die Regeneration günstig oder notwendig wäre, und zwar wenn ein so genanntes "Speed-Request"-Signal vorliegt.

Auch ist vorgesehen, dass für die Navigationsvorrichtung ein Signal an die Steuereinheit sendbar ist, wenn bei der berechneten Fahrtroute eine für eine Regeneration günstige Strecke vorliegt und gegebenenfalls vorteilhaft zeitnah durchfahrbar ist.

Es ist vorteilhaft, wenn für die Navigationsvorrichtung ein Signal an die Steuereinheit sendbar ist, wenn eine alternative neue Fahrtroute berechenbar ist, welche eine für eine Regeneration günstige Strecke aufweist und die vorteilhaft zeitnah durchfahrbar ist.

Gemäß eines weiteren erfindungsgemäßen Gedankens ist es vorteilhaft, wenn die neu berechenbare Strecke dem Fahrer anzeigbar und/oder zur Auswahl vorschlagbar ist.

In einer weiteren vorteilhaften Weiterbildung der erfindungsgemäßen Vorrichtung ist vorgesehen, dass jeweils ein Sensor vor und hinter dem Filter angeordnet ist, so dass ein Druckunterschied messbar ist. Der Zeitpunkt des Freibrennens kann durch die Sensoranordnung bestimmt werden, die den Druckunterschied vor und hinter dem Filter misst. Wenn diese Differenz einen bestimmten Wert überschreitet, dann wird der Freibrennvorgang gestartet.

Um eine Kommunikation zwischen der Navigationsvorrichtung mit der Steuereinheit zu ermöglichen, ist es zweckmäßig, dass die Steuereinheit und die Navigationsvorrichtung mit einem Bus, insbesondere einem CAN Bus verbindbar ausgeführt sind.

Die Aufgabe bezüglich des Verfahrens wird gelöst mit einem Verfahren zur Steuerung einer Abgasnachbehandlung insbesondere eines Kraftfahrzeugs mit einem Antriebsmotor, wie insbesondere Brennkraftmaschine, und einer Abgasnachbehandlungsvorrichtung, mit einer Steuereinheit zur Steuerung der Antriebsmotors und zum Einleiten einer Regeneration der Abgasnachbehandlungsvorrichtung, wobei weiterhin eine Navigationsvorrichtung vorgesehen ist, wobei die Steuervorrichtung und die Navigations vorrichtung Signale oder Daten bezüglich der Steuerung der Regeneration der Abgasnachbehandlungsvorrichtung austauschen.

Vorteilhaft ist es, wenn die Steuereinheit ein Signal an die Navigationsvorrichtung sendet, wenn eine höhere Fahrgeschwindigkeit für die Regeneration günstig oder notwendig wäre, insbesondere wenn ein so genanntes "Speed-Request"-Signal vorliegt. Auch können andere Bedingungen statt der erhöhten Fahrgeschwindigkeit angefordert werden

In einem vorteilhaften Ausführungsbeispiel, ist es zweckmäßig, wenn die Navigationsvorrichtung ein Signal an die Steuereinheit sendet, wenn bei der berechneten Fahrtroute eine für eine Regeneration günstige Strecke vorliegt und diese vorteilhaft zeitnah durchfahrbar ist.

Weiterhin ist es vorteilhaft, wenn die Navigationsvorrichtung ein Signal an die Steuereinheit sendet, wenn eine alternative neue Fahrtroute berechnet wird, welche eine für eine Regeneration günstige Strecke aufweist und die vorteilhaft zeitnah durchfahrbar ist.

Auch ist es vorteilhaft, wenn die neu berechnete Strecke dem Fahrer angezeigt und/oder zur Auswahl vorgeschlagen wird.

Günstig ist es, wenn bei der Errechnung des optimalen Zeitpunktes eine Dauer einer in die Navigationsvorrichtung eingegebenen Fahrt und/oder eine anhand der errechneten Fahrstrecke prognostizierten Geschwindigkeit berücksichtigt werden. Dadurch dann der Freibrennprozeß weiter optimiert werden.

Vorteilhafte Weiterbildungen sind in den Unteransprüchen beschrieben.

### Kurze Beschreibung der Zeichnungen

Nachstehend wird die Erfindung auf der Grundlage eines Ausführungsbeispiels anhand der Zeichnungen näher erläutert. Es zeigt:

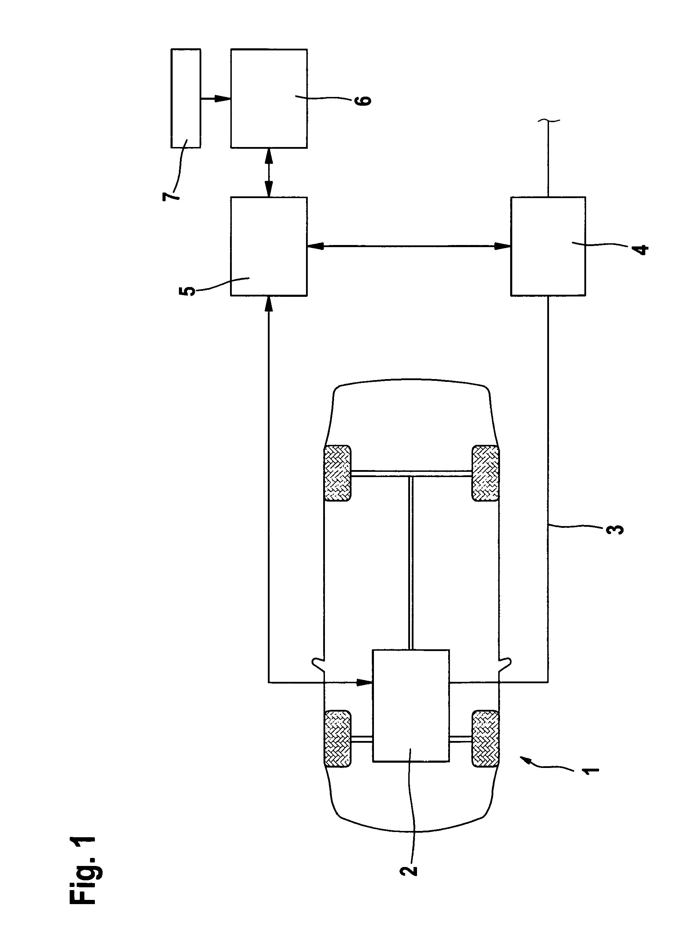

Fig. 1 eine schematische Darstellung eines Fahrzeugs.

### Bevorzugte Ausführung der Erfindung

Die Figur 1 zeigt schematisch ein Kraftfahrzeug 1 mit Antriebsmotor 2, und zwar eine Diesel-Brennkraftmaschine, bei welcher im Abgasstrang 3 eine Abgasnachbehandlungsvorrichtung, und zwar ein Dieselrußpartikelfilter 4 vorgesehen ist. Der Antriebsmotor 2 wird dabei von einer Steuereinheit 5 gesteuert, welche auf Signale und Daten des Fahrzeugs 1, des Antriebsmotors 2 und/oder der Abgasnachbehandlungsvorrichtung 4 zurückgreift.

Weiterhin ist eine Ortungs- und/oder Navigationsvorrichtung 6 vorgesehen, welche aufgrund von Satelliten- und/oder Kartendaten die aktuelle Position des Fahrzeugs 1 bestimmt und beispielsweise bei fahrerseitiger Auswahl eines Zieles und einer Zielführung eine Route auswählt und den Fahrer mittels angezeigter optischer und/oder akustischer Kommandos zum gewünschten Ziel führt. Dabei greift die Ortungs- und/oder Navigationsvorrichtung 6 bevorzugt auf in einem Speicher 7 vorhandene digitale Kartendaten zu und wählt abhängig von aktuellen Standort und von weiteren vorgegebenen gegebenenfalls vorwählbaren Randbedingungen die optimale Strecke aus.

Die Steuereinheit 5 und die Ortungs- und/oder Navigationsvorrichtung 6 sind mit einem Bus, insbesondere einem CAN Bus verbunden.

Wie oben bereits ausgeführt, ist der Dieselrußpartikelfilter 4 derart ausgestaltet, dass dieser von Zeit zu Zeit abhängig von seiner Beladung regeneriert werden muss. Dies kann bei dem Partikelfilter 4 beispielsweise durch die gezielte Erhöhung der Abgaseingangstemperatur am Partikelfilter geschehen. Sind jedoch die aktuellen Bedingungen des Fahrzeugzustandes nicht geeignet, eine Regeneration des Partikelfilters 4 durchzuführen, weil die Abgastemperatur nicht auf die gewünschte für die Regeneration wünschenswerte Temperatur angehoben werden kann, kann ein entsprechendes Signal oder eine entsprechende Mitteilung auf der Anzeige im Fahrzeug mitgeteilt werden, wie die Nachricht, eine Werkstatt aufzusuchen oder des so genannten "Speed Requests", also eine Anfrage für eine höhere Fahrgeschwindigkeit, wonach eine Fahrtstrecke mit erhöhter Fahrzeuggeschwindigkeit bevorzugt werden würde, weil in einem solchen Fahrzustand die Abgastemperatur auf die für die Regeneration nötige Temperatur angehoben werden könnte.

In Falle einer Steuerung der Brennkraftmaschine 2 zur Regeneration des Dieselrußpartikelfilters 4 kann, wie bereits oben beschrieben, ein so genannter "Werkstatt-Befehl" oder ein so genannter "Speed Request"- Befehl ausgegeben werden.

Liegt ein solcher Befehl vor und befindet sich das Fahrzeug in einem Routenzielführungsmodus, so kann im Falle, dass der Ortungs- und/oder Navigationsvorrichtung 6 der "Speed-Request"-Befehl vorliegt, von der Navigationsvorrichtung eine Route vorgeschlagen werden, bei welcher eine erhöhte Fahrgeschwindigkeit mit höherer Wahrscheinlichkeit realisiert werden kann. So kann beispielsweise eine Autobahnstrecke oder eine Bundesstraßenstrecke vorgeschlagen werden, wenn der dadurch in Kauf zu nehmende Umweg nicht allzu groß ist und im Bereich eines voreinstellbaren akzeptablen Bereich eines Umweges liegt.

Somit ist es vorteilhaft, wenn zwischen der Steuereinheit 5 und der Navigationsvorrichtung 6 eine Signal- oder Datenverbindung, insbesondere ein CAN-Bus, vorliegt, über welchen Signale oder Daten ausgetauscht werden können, wie beispielsweise ein "Speed-Request"-Befehl oder -Signal.

Im diesem Anwendungsbeispiel kann beispielsweise die Bestimmung einer neuen Route durch die Navigationsvorrichtung 6 erfolgen, gleichzeitig oder auch bevor das "Speed-Request"-Signal auf der Fahrzeuganzeige angezeigt wird, so dass in diesem Falle gegebenenfalls sogar vermieden werden könnte, das "Speed-Request"-Signal anzuzeigen, weil die vorgeschlagene Route dem Speed-Request genügt. Dies kann beispielsweise dadurch realisiert werden, dass die Navigationsvorrichtung 6 der Steuereinheit 5 ein Signal übergibt, welches dieses anzeigt. Bei der anderen vorgeschlagenen Route kann weiterhin eine Fahrerinformation ausgegeben werden, so dass der Fahrer darüber in Kenntnis gesetzt wird, dass die neue Route vorgeschlagen wird, weil diese für die Abgasnachbehandlung vorteilhaft ist. Dies dient der Akzeptanz der neuen Route beim Fahrer, wenn er die eigentlich günstigere Route kennt und dennoch eine davon abweichende Route angezeigt bekommt.

Gemäß eines anderen Ausführungsbeispieles kann bei Vorliegen eines "Speed-Request"-Signals die Navigationsvorrichtung 6 auch abschätzen, ob in der näheren Zukunft eine Strecke zu fahren wäre, die den Anforderungen für die Regeneration des Partikelfilters entsprechen würde und somit für die Regeneration günstig wäre. Wäre dies der Fall, so könnte die Navigationsvorrichtung 6 der Steuereinheit 5 ein entsprechendes Signal senden, so dass die Anzeige des "Speed-Request"-Signals ggf. unterbleiben kann und daher nicht angesteuert wird. Entsprechend ist es vorteilhaft, wenn die Steuereinheit 5 und die Navigationsvorrichtung 6 sich Daten austauschen über das vorliegen einer Notwendigkeit einer Regeneration und der dazu vorliegenden Bedingungen. Sind die dafür vorteilhaften oder notwendigen Bedingungen vorliegend, so dass keine Information oder Anweisung an den Fahrer ausgegeben werden muss, so kann die Regeneration angesteuert und durchgeführt werden.

Weiterhin ist jeweils ein Sensor, insbesondere ein Drucksensor vor und hinter dem Filter angeordnet, so dass ein Druckunterschied messbar ist. Die gemessenen Werte könne über einen CAN Bus an die Steuereinheit 5 übergeben werden.

Nachdem also eine Route durch die Navigationsvorrichtung 6 berechnet wurde, kann in der Regel davon ausgegangen werden, dass diese Route vom Fahrzeug abgefahren wird. Anhand der Route und dem Zustand des Partikelfilters 4 kann ein optimaler Zeitpunkt zum Freibrennen des Filters 4 festgelegt werden. Dieser Zeitpunkt kann z.B. bezüglich Dauer und Geschwindigkeit optimiert werden. Dies kann anhand eines Geschwindigkeitsprofils der berechneten Route bestimmt werden. Als weiteres Kriterium könnten auch Metainformationen, wie Umweltzonen, in die Kalkulation mit einfließen. Diese Optimierung kann abgestuft erfolgen, indem bei Überschreiten eines ersten Schwellwertes der durch die Sensoranordnung erfassten Druckdifferenz versucht wird, in Zusammenarbeit mit der Navigationsvorrichtung 6 und Umgebungsparametern einen optimalen Zeitpunkt für das Freibrennen zu finden.

Bei dieser bevorzugten Ausgestaltung der Vorrichtung errechnet die Navigationsvorrichtung 6 einen optimalen Zeitpunkt für ein Freibrennen des Dieselrußpartikelfilters und legt diesen fest. Hierbei kann berücksichtigt werden, ob die Fahrt im Stadtverkehr, auf einer Landstraße oder auf einer Autobahn erfolgen wird. Beispielsweise kann die Dauer einer Autobahnfahrt berücksichtigt werden, so dass ein Freibrennen während dieser Autobahnfahrt und nicht im Stadtverkehr mit möglicher Umweltzone erfolgt. Bei der Errechnung des optimalen Zeitpunktes kann also die Dauer der in die Navigationsvorrichtung eingegebenen Fahrt und/oder die anhand der errechneten Fahrstrecke prognostizierten Geschwindigkeit berücksichtigt werden.

Die Erfindung ist nicht nur auf die beschriebenen Beispiele beschränkt. So kann anstatt eines Dieselrußpartikelfilters auch eine andere Abgasbehandlungsvorrichtung eingesetzt werden.

## Patentansprüche

1. Vorrichtung zur Steuerung einer Abgasnachbehandlung eines Kraftfahrzeugs (1) mit einer, Diesel-Brennkraftmaschine als Antriebsmotor (2) und einem Dieselrußpartikelfilter (4) mit einer Steuereinheit (5) zur Steuerung des Antriebsmotors (2) und zum Einleiten einer Regeneration des Dieselrußpartikelfilters (4), wobei weiterhin eine Navigationsvorrichtung (6) vorgesehen ist, wobei zwischen der Steuereinheit (5) und der Navigationsvorrichtung (6) Signale oder Daten bezüglich der Steuerung der Regeneration austauschbar sind, **dadurch gekennzeichnet, dass** von der Steuereinheit (5) ein Signal an die Navigationsvorrichtung (6) sendbar ist, wenn eine höhere Fahrgeschwindigkeit für die Regeneration günstig oder notwendig wäre und wenn ein so genanntes "Speed-Request"-Signal vorliegt und wenn bei einer berechneten Fahrtroute eine für eine Regeneration günstige Strecke vorliegt und durchfahrbar ist.

2. Vorrichtung nach Anspruch 1, **dadurch gekennzeichnet, dass** von der Navigationsvorrichtung (6) ein Signal an die Steuereinheit (5) sendbar ist, wenn eine Fahrtroute berechenbar ist, welche eine für eine Regeneration günstige Strecke aufweist und die vorteilhaft zeitnah durchfahrbar ist.

3. Vorrichtung nach Anspruch 2, **dadurch gekennzeichnet, dass** die neu berechenbare Strecke dem Fahrer anzeigbar und/oder zur Auswahl vorschlagbar ist.

4. Vorrichtung nach einem der vorhergehenden Ansprüche, **dadurch gekennzeichnet, dass** jeweils ein Sensor vor und hinter dem Filter angeordnet ist, so dass ein Druckunterschied messbar ist.

5. Vorrichtung nach einem der vorhergehenden Ansprüche, **dadurch gekennzeichnet, dass** die Steuereinheit (5) so ausgeführt ist, dass ein Freibrennen kurz vor Erreichen eines in die Navigationsvorrichtung (6) eingegebenen Fahrtzieles vermieden wird.

6. Vorrichtung nach einem der vorhergehenden Ansprüche, **dadurch gekennzeichnet, dass** die Steuereinheit (5) und die Navigationsvorrichtung (6) mit einem Bus, insbesondere einem CAN Bus verbindbar ausgeführt sind.

7. Verfahren zur Steuerung einer Abgasnachbehandlung mit einer Vorrichtung nach einem der vorhergehenden Ansprüche, wobei die Steuereinheit (5) und die Navigationsvorrichtung (6) Signale oder Daten bezüglich der Steuerung der Regeneration des Dieselrußpartikelfilters (4) austauschen und von der Steuereinheit (5) ein Signal an die Navigationsvorrichtung (6) gesendet wird, wenn eine höhere Fahrgeschwindigkeit für die Regeneration günstig oder notwendig wäre und wenn ein so genanntes "Speed-Request"-Signal vorliegt und wenn bei einer berechneten Fahrtroute eine für eine Regeneration günstige Strecke vorliegt und durchfahrbar ist.

8. Verfahren nach Anspruch 7, **dadurch gekennzeichnet, dass** die Navigationsvorrichtung (6) ein Signal an die Steuereinheit (5) sendet, wenn eine Fahrtroute berechnet wird, welche eine für eine Regeneration günstige Strecke aufweist und die vorteilhaft zeitnah durchfahrbar ist.

9. Verfahren nach einem der Ansprüche 7 oder 8, **dadurch gekennzeichnet, dass** eine neu berechnete Strecke dem Fahrer angezeigt und/oder zur Auswahl vorgeschlagen wird.

10. Verfahren nach einem der vorhergehenden Ansprüche, **dadurch gekennzeichnet, dass** die Navigationsvorrichtung (6) einen optimalen Zeitpunkt für ein Freibrennen des Dieselrußpartikelfilters (4) errechnet und festlegt.

11. Verfahren nach Anspruch 10, **dadurch gekennzeichnet, dass** bei der Errechnung des optimalen Zeitpunktes eine Dauer einer in die Navigationsvorrichtung (6) eingegebenen Fahrt und/oder eine anhand der errechneten Fahrstrecke prognostizierten Geschwindigkeit berücksichtigt werden.

12. Verfahren nach Anspruch 10 oder 11, **dadurch gekennzeichnet, dass** bei der Errechnung Metainformationen, insbesondere Umweltzonen mit einfließen.

## Claims

1. Device for controlling an exhaust-gas aftertreatment system of a motor vehicle (1), having a diesel internal combustion engine as a drive engine (2), and having a diesel soot particle filter (4) with a control unit (5) for controlling the drive engine (2) and for initiating a regeneration of the diesel soot particle filter (4), a navigation device (6) also being provided, it being possible for signals or data relating to the control of the regeneration to be exchanged between the control unit (5) and the navigation device (6), **characterized in that** a signal can be transmitted from the control unit (5) to the navigation device (6) if a higher driving speed would be expedient or necessary for the regeneration and if a so-called "speed request" signal is present and if, in a calculated driving route, a section expedient for a regeneration is present and can be driven through.

2. Device according to Claim 1, **characterized in that** a signal can be transmitted from the navigation device (6) to the control unit (5) if a driving route can be calculated which has a section expedient for a regeneration and which can advantageously be driven through promptly.

3. Device according to Claim 2, **characterized in that** the newly calculable section can be indicated to the driver and/or proposed to the driver for selection.

4. Device according to one of the preceding claims, **characterized in that** in each case one sensor is arranged upstream and downstream of the filter such that a pressure difference can be measured.

5. Device according to one of the preceding claims, **characterized in that** the control unit (5) is designed such that a burn-off shortly before reaching a destination input into the navigation device (6) is avoided.

6. Device according to one of the preceding claims, **characterized in that** the control unit (5) and the navigation device (6) are designed such that they can be connected to a bus, in particular a CAN bus.

7. Method for controlling an exhaust-gas aftertreatment system having a device according to one of the preceding claims, the control unit (5) and the navigation device (6) exchanging signals or data relating to the control of the regeneration of the diesel soot particle filter (4), and a signal being transmitted from the control unit (5) to the navigation device (6) if a higher driving speed would be expedient or necessary for the regeneration and if a so-called "speed request" signal is present and if, in a calculated driving route, a section expedient for a regeneration is present and can be driven through.

8. Method according to Claim 7, **characterized in that** the navigation device (6) transmits a signal to the control unit (5) if a driving route is calculated which has a section expedient for a regeneration and which can advantageously be driven through promptly.

9. Method according to either of Claims 7 and 8, **characterized in that** the newly calculated section is indicated to the driver and/or proposed to the driver for selection.

10. Method according to one of the preceding claims, **characterized in that** the navigation device (6) calculates and defines an optimum time for a burn-off of the diesel soot particle filter (4).

11. Method according to Claim 10, **characterized in that** a duration of a journey input into the navigation device (6) and/or a speed predicted on the basis of the calculated driving route are taken into consideration in the calculation of the optimum time.

12. Method according to Claim 10 or 11, **characterized in that** metainformation, in particular low emission zones, are incorporated in the calculation.

## Revendications

1. Dispositif pour commander un post-traitement des gaz d'échappement d'un véhicule automobile (1) comprenant un moteur à combustion diesel en tant que moteur d'entraînement (2) et un filtre à particules de suie diesel (4) avec une unité de commande (5) pour commander le moteur d'entraînement (2) et pour amorcer une régénération du filtre à particules de suie diesel (4), un dispositif de navigation (6) étant en outre prévu, des signaux ou des données relatifs à la commande de la régénération pouvant être échangés entre l'unité de commande (5) et le dispositif de navigation (6), **caractérisé en ce qu'**un signal peut être envoyé au dispositif de navigation (6) depuis l'unité de commande (5) lorsqu'une vitesse de conduite supérieure serait favorable ou nécessaire pour la régénération, et lorsqu'il existe un signal dit de "demande de vitesse" et lorsque pour une trajectoire de conduite calculée, il existe une distance favorable pour une régénération pouvant être parcourue.

2. Dispositif selon la revendication 1, **caractérisé en ce qu'**un signal peut être envoyé à l'unité de commande (5) depuis le dispositif de navigation (6) lorsqu'une trajectoire de conduite peut être calculée, laquelle présente une distance favorable pour une régénération et peut être parcourue avantageusement promptement.

3. Dispositif selon la revendication 2, **caractérisé en ce que** la distance pouvant être calculée nouvellement peut être indiquée au conducteur et/ou peut être proposée en vue de sa sélection.

4. Dispositif selon l'une quelconque des revendications précédentes, **caractérisé en ce qu'**un capteur est disposé à chaque fois avant et après le filtre, de sorte qu'une différence de pression puisse être mesurée.

5. Dispositif selon l'une quelconque des revendications précédentes, **caractérisé en ce que** l'unité de commande (5) est réalisée de manière à éviter une combustion libre juste avant d'atteindre une destination introduite dans le dispositif de navigation (6).

6. Dispositif selon l'une quelconque des revendications précédentes, **caractérisé en ce que** l'unité de commande (5) et le dispositif de navigation (6) sont réalisés de manière à pouvoir être connectés par un bus, notamment un bus CAN.

7. Procédé de commande d'un post-traitement des gaz d'échappement avec un dispositif selon l'une quelconque des revendications précédentes, dans lequel l'unité de commande (5) et le dispositif de navigation (6) échangent des signaux ou des données relatifs à la commande de la régénération du filtre à particules de suie diesel (4) et un signal est envoyé depuis l'unité de commande (5) au dispositif de navigation (6), lorsqu'une vitesse de conduite supérieure serait favorable ou nécessaire pour la régénération, et lorsqu'il existe un signal dit de "demande de vitesse" et lorsque pour une trajectoire de conduite calculée, il existe une distance favorable pour une régénération pouvant être parcourue.

8. Procédé selon la revendication 7, **caractérisé en ce que** le dispositif de navigation (6) envoie un signal à l'unité de commande (5) lorsqu'une trajectoire de conduite est calculée, laquelle présente une distance favorable pour une régénération et peut être parcourue avantageusement promptement.

9. Procédé selon l'une quelconque des revendications 7 ou 8, **caractérisé en ce qu'**une distance pouvant être calculée nouvellement est indiquée au conducteur et/ou est proposée en vue de sa sélection.

10. Procédé selon l'une quelconque des revendications précédentes, **caractérisé en ce que** le dispositif de navigation (6) calcule et détermine un instant optimal pour une combustion libre du filtre à particules de suie diesel (4).

11. Procédé selon la revendication 10, **caractérisé en ce que** lors du calcul de l'instant optimal, une durée d'une conduite introduite dans le dispositif de navigation (6) et/ou une vitesse pronostiquée à l'aide de la distance de conduite calculée sont prises en compte.

12. Procédé selon la revendication 10 ou 11, **caractérisé en ce que** lors du calcul, des méta-informations, notamment des zones de l'environnement, sont incorporées.
